# EUROPÄISCHE PATENTSCHRIFT

(11) **EP 2 430 094 B1**
(45) Veröffentlichungstag und Bekanntmachung des Hinweises auf die Patenterteilung: **27.03.2013**
(21) Anmeldenummer: 10721398.5
(22) Anmeldetag: 06.05.2010
(51) Int. Cl.: C08L 25/12, C08L 55/02

(54) **VERSTÄRKTE STYROLCOPOLYMERE**
Reinforced styrol copolymers
Styrocopolymères renforcés

(30) Priorität: 11.05.2009 EP 09159897
(43) Veröffentlichungstag der Anmeldung: 21.03.2012
(73) Patentinhaber: Styrolution GmbH, 60325 Frankfurt am Main (DE)
(72) Erfinder: WEBER, Martin, 67487 Maikammer (DE); BLINZLER, Marko, 68163 Mannheim (DE); VAN DER MEER, Roelof, NL-4661 Halsteren (NL)
(74) Vertreter: Féaux de Lacroix, Stefan
(86) Internationale Anmeldenummer: PCT/EP2010/056163
(87) Internationale Veröffentlichungsnummer: WO 2010/130621

(56) Entgegenhaltungen:
- WO-A1-91/06605
- WO-A1-2006/040087
- WO-A1-2008/110539
- WO-A1-2008/119678
- US-A1- 2007 191 532

## Beschreibung

Die Erfindung betrifft glasfaserverstärkte Styrol-Acrylnitril-Copolymere, die einen Fließverbesserer enthalten, Verfahren zu ihrer Herstellung, ihre Verwendung sowie daraus hergestellte Formkörper, Fasern und Folien.

Faserverstärkte Thermoplaste finden im Automobilbereich zahlreiche Anwendungen. Das derzeit in den größten Mengen verwendete thermoplastische Matrixsystem ist Polypropylen. Aufgrund der schlechten thermomechanischen Eigenschaften von Polypropylen sind derartige Produkte jedoch nicht für thermisch und mechanisch hochbelastete Strukturbauteile geeignet.

Neben Polypropylen wurde auch der Einsatz glasfaserverstärkter Styrolcopolymere vorgeschlagen. Die WO 2008/110539 beschreibt einen Faserverbundwerkstoff, der neben Styrol-Acrylnitril-Copolymeren und Styrol-Acrylnitril-Maleinsäureanhydrid-Copolymeren Glasfasern enthält. Die Formmassen zeigen bei erhöhten Temperaturen eine verbesserte Schubfestigkeit, insbesondere verbesserte Quer-Längs-Schubfestigkeit.

Die Formteileigenschaften sind jedoch noch nicht für alle Anwendungen zufrieden stellend. Bei der Herstellung von faserverstärkten Kunststoffen ist die Matrixviskosität eine wichtige Stellgröße. Für die Herstellung von Faserverbundwerkstoffen weisen solche Matrices in der Regel zu hohe Schmelzviskositäten auf.

Aufgabe der vorliegenden Erfindung ist die Bereitstellung verbesserter verstärkter Styrol-Copolymere mit guten mechanischen Eigenschaften, die vorteilhafte Formteileigenschaften bei der Herstellung von Faserverbundwerkstoffen bzw. Formkörpern aufweisen. Die Vorteile sollen sowohl bei einer Kurzglasverstärkung wie auch bei einer Langfaser- oder Endlosfaserverstärkung zugänglich sein.

Die Aufgabe wird erfindungsgemäß gelöst durch eine thermoplastische Formmasse, enthaltend,
a) 0 bis 97,9 Gew.-% eines oder mehrerer (Methyl)Styrol-Acrylnitril-Copolymere, die keine von Maleinsäureanhydrid abgeleiteten Einheiten aufweisen, mit einer Viskositätszahl kleiner 85 ml/g, als Komponente A,
b) 1 bis 98,9 Gew.-% eines oder mehrerer (Methyl)Styrol-Acrylnitril-Copolymere, die, bezogen auf die gesamte Komponente B, 0,5 bis 5 Gew.- % von Maleinsäureanhydrid abgeleitete Einheiten aufweisen, als Komponente B,
c) 1 bis 75 Gew.-% Glasfasern als Komponente C,
d) 0,1 bis 20 Gew.-% eines oder mehrerer Fließverbesserer, ausgewählt aus
   d₁) mindestens einem hoch- oder hyperverzweigten Polycarbonat mit einer OH-Zahl von 1 bis 600 mg KOH/g Polycarbonat (gemäß DIN 53240, Teil 2) als Komponente D1,
   d₂) mindestens einem hoch- oder hyperverzweigten Polyester des Typs AₓB_{y} mit x mindestens 1,1 und y mindestens 2,1 als Komponente D2, d₃
   ) Alkylacrylat-Oligomeren mit einem Gewichtsmittel des Molekulargewichts im Bereich von 1.200 bis 4.000 g/mol als Komponente D3,
e) 0 bis 40 Gew.-% weitere Füllstoffe, Kautschuke und/oder weitere Zusatzstoffe als Komponente E,
wobei die Gesamtmenge der Komponenten A bis D und gegebenenfalls E 100 Gew.-% ergibt.

Die Aufgabe wird zudem gelöst durch ein Verfahren zur Herstellung derartiger thermoplastischer Formmassen, wobei man die Komponenten A bis D und gegebenenfalls E in beliebiger Reihenfolge miteinander vermischt.

Der Anteil der Komponente A in den thermoplastischen Formmassen beträgt 0 bis 97,9 Gew.-% oder, sofern sie vorliegt, 1 bis 97,9 Gew.-%, vorzugsweise 35 bis 95 Gew.-%, insbesondere 70 bis 90 Gew.-%.

Komponente B ist in den thermoplastischen Formmassen in einer Menge von 1 bis 98,9 Gew.-%, bei Vorliegen der Komponente A 1 bis 97,9 Gew.-%, vorzugsweise 2 bis 50 Gew.-%, insbesondere 3 bis 10 Gew.-% enthalten.

Komponente C ist in den thermoplastischen Formmassen in einer Menge von 1 bis 75 Gew.-%, vorzugsweise 5 bis 40 Gew.-%, insbesondere 10 bis 20 Gew.-% enthalten.

Komponente D ist in den thermoplastischen Formmassen in einer Menge von 0,1 bis 20 Gew.-%, vorzugsweise 0,75 bis 10 Gew.-%, insbesondere 1 bis 3 Gew.-% enthalten.

Komponente E ist in den thermoplastischen Formmassen in einer Menge von 0 bis 40 Gew.-%, vorzugsweise 0 - 30 Gew.-%, insbesondere 0 - 17 Gew.-% enthalten. Sofern Komponente E vorliegt, beträgt die Mindestmenge 1 Gew.-%.

Sofern eine oder mehrere Inhaltsstoffe der Komponente E vorliegen, vermindert sich die maximal mögliche Menge der Komponenten A - D entsprechend um die hinzukommende Mindestmenge der Komponente E, so dass sich in jedem Fall eine Gesamtmenge von 100 Gew.-% ergibt.

### Komponente A

Als Komponente A enthalten die erfindungsgemäßen thermoplastischen Formmassen ein oder mehrere (Methyl)Styrol-Acrylnitril-Copolymere, die keine von Maleinsäureanhydrid abgeleiteten Einheiten aufweisen. Dabei können in den Copolymeren neben Styrol und Acrylnitril beliebige geeignete Comonomere vorliegen. Bevorzugt handelt es sich um ein Styrol-Acrylnitril-Copolymer oder Methylstyrol-Acrylnitril-Copolymer.

Als Komponente A der thermoplastischen Matrix M sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern sie eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 80 Gew.-%, insbesondere 65 bis 78 Gew.-%, Styrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.-%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere und dieser α-Methylstyrol-Acrylnitril-Copolymere.

Als oben genannte weitere Monomere sind alle copolymerisierbaren und von Maleinsäureanhydrid verschiedene Monomere einsetzbar, beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach an sich bekannten Methoden herstellen. Sie lassen sich z. B. durch radikalische Polymerisation, insbesondere durch Emulsions-, Suspensions-, Lösungs- oder Massepolymerisation herstellen.

Die Styrolcopolymere sind bevorzugt kautschukfrei.

### Komponente B

Als Komponente B enthalten die erfindungsgemäßen thermoplastischen Formmassen (Methyl)Styrol-Acrylnitril-Copolymere, die, bezogen auf die gesamte Komponente B, 0,5 bis 5 Gew.-% von Maleinsäureanhydrid abgeleitete Einheiten aufweisen. Bevorzugt beträgt dieser Anteil 1 bis 3 Gew.-%, insbesondere 2,0 bis 2,2 Gew.-%.

Besonders bevorzugt ist Komponente B ein Styrol-Acrylnitril-Maleinsäureanhydrid-Terpolymer.

Im Terpolymer beträgt der Anteil an Acrylnitril, bezogen auf das gesamte Terpolymer, vorzugsweise 10 - 30 Gew.-%, besonders bevorzugt 15 - 30 Gew.-%, insbesondere 20 - 25 Gew.-%. Der verbleibende Rest entfällt auf Styrol.

Die Copolymere haben im allgemeinen Molekulargewichte M_{w} im Bereich von 30.000 bis 500.000 g/mol vorzugsweise von 50.000 bis 250.000 g/mol, insbesondere von 70.000 bis 200.000 g/mol, bestimmt durch GPC unter Verwendung von Tetrahydrofuran (THF) als Eluent und mit Polystyrol-Kalibrierung.

Die Copolymeren können durch freie radikale bildende Polymerisation der entsprechenden Monomere hergestellt werden. Die Herstellung ist beispielsweise in WO 2005/040281, Seite 10, Zeile 31 bis Seite 11, Zeile 8, näher erläutert.

Ferner können auch Styrol-N-Phenylmaleinimid-Maleinsäureanhydrid-Terpolymere eingesetzt werden. Es kann ferner auf die Beschreibungen in EP-A-0 784 080 sowie DE-A-100 24 935 verwiesen werden, wie auch auf DE-A-44 07 485, Beschreibung der dortigen Komponente B auf den Seiten 6 und 7.

### Komponente C

Als Komponente C enthalten die erfindungsgemäßen thermoplastischen Formmassen Glasfasern. Als Glasfasern können alle technisch verfügbaren Glastypen verwendet werden. Es kann sich beispielsweise um Kurzglasfasem, Langglasfasem oder Endlosglasfasern handeln. Eine Beschreibung geeigneter Glasfasern findet sich im Handbook of Reinforcements for Plastics, Van Nostrand Reinholt Company Inc., 1987, Seiten 233 ff. Als Glasfasern können technisch gebräuchliche Rovings mit einem Faserdurchmesser der Einzelfilamente von bevorzugt 6 bis 30 µm eingesetzt werden. Üblicherweise werden die Einzelfilamente bei der Faserherstellung zu Strängen zusammengefasst, deren Gewicht pro Kilometer wie in der Fasertechnik üblich in Tex angegeben wird. Bevorzugt werden Glasfaserrovings mit 1.000 bis 10.000 Tex eingesetzt.

Die Glasfasern können zur besseren Verträglichkeit mit dem Matrixmaterial mit Schlichte und einem Haftvermittler ausgerüstet sein. Bevorzugte Glasfasern haben einen Durchmesser im Bereich von 6 bis 20 µm. Im fertigen Spritzgussteil liegt die mittlere Länge der Glasfasern vorzugsweise im Bereich von 0,08 bis 5 mm.

Bei der Herstellung von Formkörpern durch Verpressen ist die Faserlänge nicht beschränkt.

Die Glasfasern können auch in Form von Geweben, Matten oder Glasseidenrovings eingesetzt werden.

### Komponente D

Als Komponente D werden eine oder mehrere Fließverbesserer eingesetzt, ausgewählt aus
d₁) mindestens einem hoch- oder hyperverzweigten Polycarbonat mit einer OH-Zahl von 1 bis 600 mg KOH/g Polycarbonat (gemäß DIN 53240, Teil 2) als Komponente D1,
d₂) mindestens einem hoch- oder hyperverzweigten Polyester des Typs AₓB_{y} mit x mindestens 1,1 und y mindestens 2,1 als Komponente D2,
d₃) Alkylacrylat-Oligomeren mit einem Gewichtsmittel des Molekulargewichts im Bereich von 1.200 bis 4.000 g/mol als Komponente D3.

Bevorzugt weist Komponente D1 ein Zahlenmittel des Molekulargewichtes Mₙ von 100 bis 15.000 g/mol auf und Komponente D2 ein Zahlenmittel des Molekulargewichtes Mₙ von 300 bis 30.000 g/mol auf.

Bevorzugt weist Komponente D1 eine Glasübergangstemperatur T_{g} von -80 °C bis 140 °C auf und Komponente D2 eine Glasübergangstemperatur T_{g} von -50 °C bis 140 °C auf.

Bevorzugt weist Komponente D1 eine Viskosität (mPas) bei 23 °C (gemäß DIN 53019) von 50 bis 200.000 auf.

Bevorzugt weist Komponente D2 eine OH-Zahl (gemäß DIN 53240) von 0 bis 600 mg KOH/g Polyester und/oder eine COOH-Zahl (gemäß DIN 53240) von 0 bis 600 mg KOH/g Polyester auf.

Bevorzugt ist Komponente D3 ein Poly-n-butylacrylat-Oligomer mit einem Gewichtsmittel des Molekulargewichts von 1.500 - 2.000 g/mol (bestimmt durch GPC).

Als Komponente D) enthalten die erfindungsgemäßen Formmassen 0,1 bis 20 Gew.-% D1) mindestens eines hoch- oder hyperverzweigten Polycarbonates, mit einer OH-Zahl von 1 bis 600, vorzugsweise 10 bis 550 und insbesondere von 50 bis 550 mg KOH/g Polycarbonat (gemäß DIN 53240, Teil 2) oder mindestens eines hyperverzweigten Polyesters als Komponente D2) oder deren Mischungen, wie nachstehend erläutert wird.

Unter hyperverzweigten Polycarbonaten D1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die Summe aus der mittleren Anzahl von dendritischen Verknüpfungen und terminalen Einheiten dividiert durch die Summe der mittleren Zahl der Gesamtverknüpfungen (dendritische, lineare und terminale Verknüpfungen) multipliziert mit 100, 10 bis 99,9 %, bevorzugt 20 bis 99 % und besonders bevorzugt 20 - 95 %, beträgt.

Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Vorzugsweise weist die Komponente D1) ein Zahlenmittel des Molekulargewichtes Mn von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis +140, vorzugsweise von -60 bis 120°C (gemäß DSC, DIN 53765).

Insbesondere beträgt die Viskosität (mPas) bei 23°C (gemäß DIN 53019) von 50 bis 200.000, insbesondere von 100 bis 150000 und ganz besonders bevorzugt von 200 bis 100.000.

Die Komponente D1) ist vorzugsweise erhältlich durch ein Verfahren, welches mindestens die folgenden Schritte umfasst:
a) Umsetzung mindestens eines organischen Carbonats (A) der allgemeinen Formel RO[(CO)]nOR mit mindestens einem aliphatischen, aliphatisch/aromatisch oder aromatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, aromatisch/aliphatisch oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder
ab) Umsetzung von Phosgen, Diphosgen oder Triphosgen mit o. g. Alkohol (B) unter Chlorwasserstoffeliminierung
sowie
b) intermolekulare Umsetzung der Kondensationsprodukte (K) zu einem hochfunktionellen, hoch- oder hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (A) der allgemeinen Formel RO(CO)nOR handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel RO(CO)nOR eingesetzt; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOx hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin, Polyglycerine, Bis(tri-methylolpropan), Tris(hydroxymethyl)isocyanurat, Tris(hydroxyethyl)isocyanurat, Phloroglucinol" Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3,5-trimethylcyclohexan, Resorcin, Hydrochinon, 4,4'-Dihydroxyphenyl, Bis-(4-Bis(hydroxyphenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1'-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 39,9 mol-% bezüglich der Gesamtmenge aller Alkohole (B) und (B') zusammen. Bevorzugt beträgt die Menge 0 bis 35 mol-%, besonders bevorzugt 0 bis 25 mol-% und ganz besonders bevorzugt 0 bis 10 mol-%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate D1) ist es notwendig, das Verhältnis von den OH-Gruppen enthaltenden Verbindungen zu Phosgen oder Carbonat so einzustellen, dass das resultierende einfachste Kondensationsprodukt (im weiteren Kondensationsprodukt (K) genannt) im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (A) und einem Di- oder Polyalkohol (B) ergibt dabei die Anordnung XYn oder YnX, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

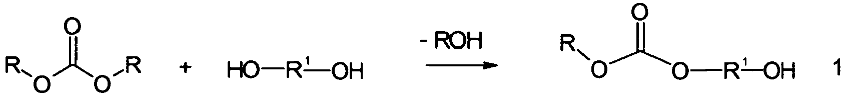

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY2, veranschaulicht durch die allgemeine Formel 2. Fokale Gruppe ist hier eine Carbonatgruppe.

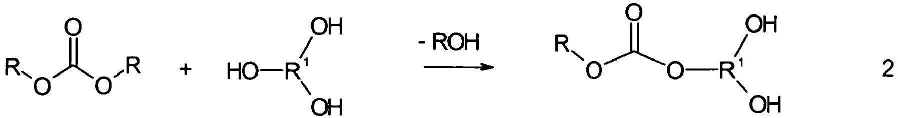

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY3, veranschaulicht durch die allgemeine Formel 3. Fokale Gruppe ist hier eine Carbonatgruppe.

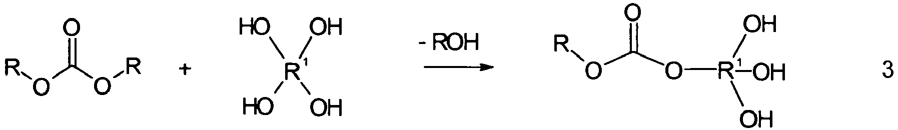

In den Formeln 1 bis 3 hat R die eingangs definierte Bedeutung und R1 steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs X2Y, fokale Gruppe ist hier eine OH-Gruppe. In der Formel 4 haben R und R1 die gleiche Bedeutung wie in den Formeln 1 bis 3.

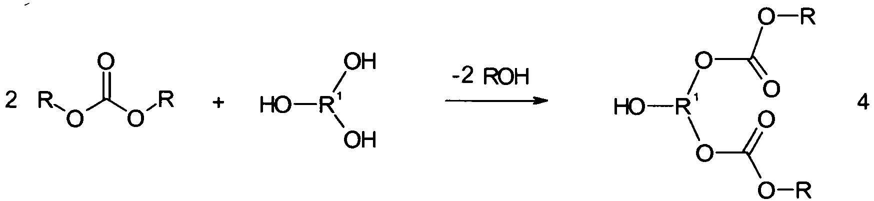

Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs XY2, fokale Gruppe ist eine Carbonatgruppe.

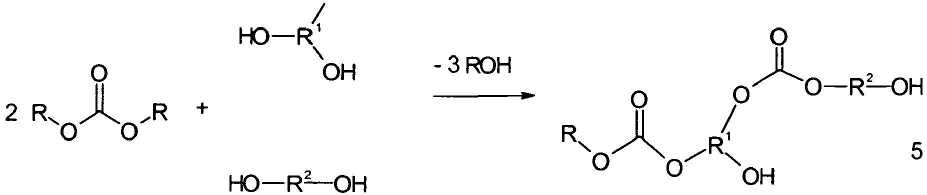

In Formel 5 bedeutet R2 einen organischen, bevorzugt aliphatischen Rest, R und R1 sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert., Setzt man die Ausgangsprodukte im Verhältnis 1:1 ein, wie in (II) dargestellt, so erhält man ein Molekül XY2. Setzt man die Ausgangsprodukte im Verhältnis 2:1 ein, wie in (IV) dargestellt, so erhält man ein Molekül X2Y. Bei einem Verhältnis zwischen 1:1 und 2:1 erhält man eine Mischung von Molekülen XY2 und X2Y.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im Allgemeinen in einer Menge von 50 bis 10000, bevorzugt von 100 bis 5000 Gew.-ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

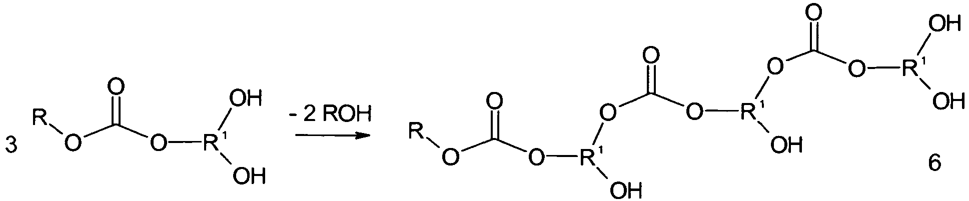

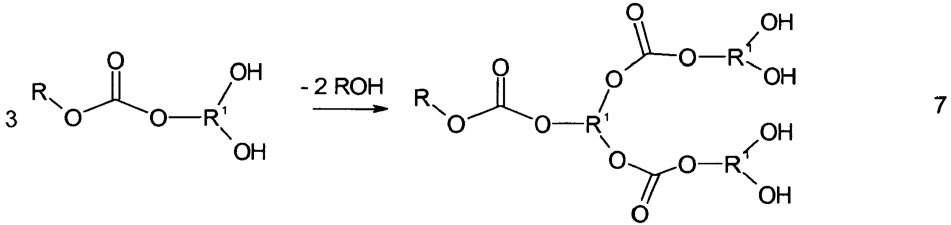

In Formel 6 und 7 sind R und R1 wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

Weiterhin kann man den Katalysator deaktivieren, bei basischen z.B. durch Zugabe von Lewissäuren oder Protonensäuren.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)aminomethan, Ethylen-diamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polycarbonate.

Durch Zugabe von Dicarbonsäuren, Tricarbonsäuren, z.B. Terephthalsäuredimethylester oder Tricarbonsäureester lassen sich Estergruppen erzeugen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen oder Carbamoylgruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahrens liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Als Komponente D2) können die erfindungsgemäßen Formmassen mindestens eines hyperverzweigten Polyesters des Typs AxBy enthalten, wobei
- x: mindestens 1,1 vorzugsweise mindestens 1,3, insbesondere mindestens 2
- y: mindestens 2,1, vorzugsweise mindestens 2,5, insbesondere mindestens 3
beträgt.

Selbstverständlich können als Einheiten A bzw. B auch Mischungen eingesetzt werden.

Unter einem Polyester des Typs AxBy versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern D2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die Summe aus der mittleren Anzahl von dendritischen Verknüpfungen und terminalen Einheiten dividiert durch die Summe der mittleren Zahl der Gesamtverknüpfungen (dendritische, lineare und terminale Verknüpfungen) multipliziert mit 100, 10 bis 99,9 %, bevorzugt 20 bis 99 % und besonders bevorzugt 20 - 95 %, beträgt.

Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Die Komponente D2) weist vorzugsweise ein Mn von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist D2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die Tg beträgt vorzugsweise von -50°C bis 140°C und insbesondere von -50 bis 100°C (mittels DSC, nach DIN 53765).

Insbesondere solche Komponenten D2) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente D2) erhältlich, u.z. indem man
(a) eine oder mehrere Dicarbonsäuren oder eines oder mehrere Derivate derselben mit einem oder mehreren mindestens trifunktionellen Alkoholen
   oder
(b) eine oder mehrere Tricarbonsäuren oder höhere Polycarbonsäuren oder eines oder mehrere Derivate derselben mit einem oder mehreren Diolen
   in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester D2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus
C1-C10-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
C3-C12-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
C6-C14-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbemsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente D2) zu erhalten.

Als Diole für Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH2CH2O)n-H oder Polypropylenglykole HO(CH[CH3]CH2O)n-H oder Gemische von zwei oder mehr Vertretern der voranstehenden Verbindungen, wobei n eine ganze Zahl ist und n = 4 bis 25 beträgt. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Das Molverhältnis der Moleküle A zu Molekülen B im AxBy-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO4 und Na2SO4. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Aluminiumverbindungen der allgemeinen Formel Al(OR)3 und Titanate der allgemeinen Formel Ti(OR)4 als saure anorganische Katalysatoren einsetzbar, wobei die Reste R jeweils gleich oder verschieden sein können und unabhängig voneinander gewählt sind aus

C1-C10-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

C3-C12-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in Al(OR)3 bzw. Ti(OR)4 jeweils gleich und gewählt aus Isopropyl oder 2-Ethylhexyl.

Bevorzugte saure metallorganische Katalysatoren sind beispielsweise gewählt aus Dialkylzinnoxiden R2SnO, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.%, bevorzugt 0,2 bis 2 Gew.-% Katalysator ein.

Das erfindungsgemäße Verfahren wird unter Inertgasatmosphäre durchgeführt, das heißt beispielsweise unter Kohlendioxid, Stickstoff oder Edelgas, unter denen insbesondere Argon zu nennen ist.

Das erfindungsgemäße Verfahren wird bei Temperaturen von 60 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente D2) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geotrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Das erfindungsgemäße Verfahren wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das erfindungsgemäße Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die nach dem erfindungsgemäßen Verfahren erhältlichen hochfunktionellen, hyperverzweigten Polyester, zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester haben ein Molekulargewicht Mw von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert.

Die Verhältnisse der Komponenten D1) zu D2) betragen vorzugsweise von 1 : 20 bis 20 : 1, insbesondere von 1 : 15 bis 15 : 1 und ganz besonders von 1 : 5 bis 5 : 1, wenn diese in Mischung eingesetzt werden.

Bei den eingesetzten hyperverzweigten Polycarbonaten D1) / Polyestern D2) handelt es sich um Partikel mit einer Größe von 20 - 500 nm. Diese Nanopartikel liegen im Polymerblend fein verteilt vor, die Größe der Partikel im Compound beträgt von 20 bis 500 nm, vorzugsweise 50 - 300 nm.

Alternativ können als Komponente D3 Alkylacrylat-Oligomere mit einem Gewichtsmittel des Molekulargewichts im Bereich von 1.200 bis 4.000 g/mol, vorzugsweise 1.500 bis 2.000 g/mol eingesetzt werden. Das Molekulargewicht wird dabei mittels Gelpermeationschromatographie bestimmt. Die Alkylacrylate sind bevorzugt C₁-₁₂-Alkylacrylate, insbesondere C₄₋₈-Alkylacrylate. Besonders bevorzugt werden Butylacrylate oder E-thylhexylacrylate eingesetzt, speziell bevorzugt n-Butylacrylat. Die Herstellung der Alkylacrylat-Oligomere erfolgt nach den bekannten Verfahren der Polymerisation. Die Herstellung der Polybutylacrylate erfolgt vorzugsweise durch radikalische Polymerisation, wobei als Initiatoren Azo- oder Peroxidverbindungen verwendet werden können. Die Herstellung solcher Verbindungen ist z. B. beschrieben in "Encyclopedia of Polymer Science and Engineering, H. F. Mark (Ed.) J. Wiley & Sons, New York, 1985, Seiten 265 ff., Verfahren zur Herstellung sind ebenfalls im gleichen Dokument ab Seite 269 ff. beschrieben. Die Polybutylacrylate können bis 40 Gew.-%, bevorzugt bis 20 Gew.-% eines oder mehrerer copolymerisierbarer Monomere enthalten. Bevorzugte Comonomere sind ausgewählt aus der Gruppe bestehend aus Acrylaten, Methacrylaten, Styrol oder dessen Derivaten, Maleinsäureanhydrid, Acrylnitril und Mischungen davon.

Bevorzugt werden Polybutylacrylate verwendet, die bei Raumtemperatur flüssig sind.

### Komponente E

Als Komponente E können die erfindungsgemäßen thermoplastischen Formmassen zusätzliche faser- oder teilchenförmige Füllstoffe enthalten, wie Kohlenstofffasern, Kaliumtitanatwhisker, Aramidfasern usw.

Als teilchenförmige Füllstoffe eignen sich amorphe Kieselsäure, Magnesiumcarbonat (Kreide), gepulverter Quarz, Glimmer, Talcum, Feldspat, Glaskugeln und insbesondere Calciumsilicate wie Wollastonit und Kaolin (insbesondere kalzinierter Kaolin).

Besonders bevorzugte Kombinationen von Füllstoffen sind solche aus Glasfasern (Komponente C) und Wollastonit.

Als Komponente E können die thermoplastischen Formmassen zudem schlagzähmodifizierende Kautschuke, insbesondere Pfropfkautschuke enthalten. Unter Pfropfkautschuken im Sinne der Erfindung werden Kern-Schale-Kautschuke verstanden, die auch mehrschalig aufgebaut sein können. Es können dabei übliche Schlagzähmodifier verwendet werden.

Kautschuke enthalten einen elastomeren Anteil, der eine Glasübergangstemperatur von weniger als -10 °C, vorzugsweise von weniger als -30 °C aufweist, und sie enthalten beispielsweise zusätzlich mindestens eine funktionelle Gruppe. Geeignete funkionelle Gruppen sind beispielsweise Carbonsäure-, Carbonsäureanhydrid-, Carbonsäureester-, Carbonsäureamid-, Carbonsäureimid-, Amino-, Hydroxyl-, Expoxyd-, Urethan- und Oxazolingruppen.

Als Kautschuke, die die Zähigkeit der Blends erhöhen, seien z. B. folgende genannt: EP- bzw. EPDM-Kautschuke, die mit den o. g. funktionellen Gruppen gepfropft sein können oder nicht. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als mögliche Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozess bei einem Druck von 400 bis 4.500 bar oder durch Pfropfen der Comonomeren auf das Poly-α-Olefin hergestellt werden. Der Anteil des α-Olefins an dem Copolymeren liegt i. a. im Bereich von 99,95 bis 55 Gew.-%.

Als weitere Gruppe von geeigneten Elastomeren sind Kern- Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens einer Schale auf, wobei sich die Struktur durch die Reihenfolge der Monomerenzugabe ergibt. Die weichen Bestandteile leiten sich i. a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z B. Die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z. B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i. a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Expoxy- Oxazolin-, Urethan-, Harnstoff-, Lactam- oder Halogenbenzylgruppen ist auch hierbei durch den Zusatz geeignet funktionalisierter Monomere bei der Polymerisation der letzten Schale möglich, aber nicht zwingend. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i. a. 0 oder 0,1 bis 25 Gew.-%, vorzugsweise 0 oder 0,25 bis 15 Gew.-%, bezogen auf das Gesamtgewicht des Kern-Schale-Pfropfkautschuks. Das Gewichtsverhältnis von weichen zu harten Bestandteilen beträgt i. a. 1 : 9 bis 9 : 1, bevorzugt 3 : 7 bis 8 : 2.

Derartige Kautschuke sind an sich bekannt und beispielsweise in der EP-A 208 187 beschrieben.

Eine weitere Gruppe von geeigneten Schlagzähmodifiem sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z. B. in der US-A 3 651 014, beschrieben. Auch im Handel sind entsprechende Produkte unter den Bezeichnungen Hytrel® (Du Pont), Amitel® (Akzo) und Pelprene® (Toyobo Co. Ltd.) erhältlich.

Selbstverständlich können auch Mischungen verschiedener Kautschuke eingesetzt werden.

Vorzugsweise handelt es sich um Pfropfkautschuke, die keine ethylenisch ungesättigten Grundwasserstoffreste enthalten. Besonders bevorzugt handelt es sich um ASA-Kautschuke (Acrylnitril-Styrol-Alkylacrylat-Kautschuke).

Bei der Polymerisation der Hartphase entstehen auch untergeordnete Mengen ungepfropfter Anteile. Diese werden der Hartphase zugerechnet. Es können auch Mischungen verschiedener Kautschuke verwendet werden, wobei sich vorzugsweise die verwendeten Kautschuke in ihren Weichphasenanteilen um mindestens 5 Gew.-% unterscheiden.

Als weitere Komponenten E können weitere Zusatzstoffe eingesetzt werden. Beispiele hierfür sind Flammschutzmittel, Farbstoffe, Pigmente oder Stabilisatoren, beispielsweise Thermostabilisatoren oder UV-Stabilisatoren, sowie Gleitmittel oder Entformungshilfen.

Die Erfindung betrifft auch ein Verfahren zur Herstellung der vorstehend beschriebenen thermoplastischen Formmassen, bei denen man die Komponenten A - D und gegebenenfalls E in beliebiger Reihenfolge miteinander vermischt.

Die erfindungsgemäßen Faserverbundwerkstoffe können beispielsweise durch Pulltrusion hergestellt werden. Dabei werden die Glasfaserrovings mit Thermoplasschmelze benetzt und das dabei erhaltene Halbzeug wird anschließend zu Formkörpern verpresst. Die Durchmischung der Matrixkomponenten kann wie nachfolgend beschrieben durchgeführt werden, kann jedoch auch während des Aufschmelzens der Matrix vor der Pultrusion erfolgen.

Die Reihenfolge, in der die Komponenten gemischt werden, ist beliebig. Beispielsweise ist die Herstellung der Formmassen möglich, indem die Ausgangskomponenten in üblichen Mischvorrichtungen wie Schneckenextrudern, vorzugsweise 2-Schneckenextrudem, Brabender-Mischern oder Banbury-Mischern, sowie Knetern mischt und anschließend extrudiert. Nach der Extrusion wird das Extrudat abgekühlt und zerkleinert. Die Reihenfolge der Mischungskomponenten kann variiert werden, so können zwei oder gegebenenfalls drei Komponenten vorgemischt werden. Es können aber auch alle Komponenten gemeinsam gemischt werden.

Um eine möglichst homogene Mischung zu erhalten, ist eine intensive Durchmischung vorteilhaft. Dazu sind im Allgemeinen mittlere Mischzeiten von 0,2 - 30 Minuten bei Temperaturen von 240 - 300 °C, bevorzugt 245 - 290 °C erforderlich. Nach der Extrusion wird das Extrudat in der Regel abgekühlt und zerkleinert.

Die erfindungsgemäßen Formmassen zeichnen sich u. a. durch eine verbesserte Zähigkeit und Steifigkeit aus. Zudem zeichnen sie sich auch durch hohe Quer-Längs-Schubfestigkeit bei 80 °C aus.

Die erfindungsgemäßen thermoplastischen Formmassen können zur Herstellung von Formkörpern, Fasern und Folien verwendet werden. Insbesondere werden sie zur Herstellung von Formkörpern eingesetzt, z. B. für Kfz-Bauteile oder in Elektronikgeräten.

Die Erfindung betrifft auch Formkörper, Fasern und Folien, die aus den erfindungsgemäßen Formmassen aufgebaut sind.

Die Erfindung wird durch die nachstehenden Beispiele näher erläutert.

### Beispiele

### Herstellung und Prüfung der Formmassen

Die Viskositätszahl der Styrolco- oder -terpolymere wird nach DIN 53727 in 0,5 gew.-%iger DMF-Lösung bei 25 °C bestimmt.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Schlagzähigkeit der Produkte wurde an ISO-Stäben nach ISO 179 1eU bestimmt.

Die Steifigkeit der Materialien wird durch den im Zugversuch nach ISO 527 ermittelten E-Modul charakterisiert. In diesem Versuch wird auch die Reißdehnung ermittelt.

Durch Pulltrusion werden zuerst Halbzeuge hergestellt. Die Schmelze wird dabei durch einen Einschneckenextruder hergestellt und der Tränkeinheit zugeführt. Gleichzeitig werden Glasfaserrovings eingezogen. Die Abzugsgeschwindigkeit betrug 2 m/min. Der Faservolumenanteil war auf 0,5 eingestellt.

Die Probenfertigung erfolgte durch Aufschmelzen und Abpressen des Faser-Thermoplast-Halbzeugs in einem Probenwerkzeug. Das Presswerkzeug wurde elektrisch beheizt, der Druck wurde durch eine Hydraulikpresse aufgebracht. Die maximale Presskraft betrug 120 kN. Die Probenabmessungen betrugen 40 mm * 380 mm , wobei die Probendicke variabel war. Während des Pressvorgangs stieg der Faservolumenanteil auf etwa 0,52 an.

### Komponente A1

Copolymer aus 75 Gew.-% Styrol und 25 Gew.-% Acrylnitril, charakterisiert durch eine Viskositätszahl von 80 ml/g (gemessen bei 25 °C in 0,5 gew.-%iger DMF-Lösung).

### Komponente A2

Copolymer aus 76 Gew.-% Styrol und 24 Gew.-% Acrtylnitril, charakterisiert durch eine Viskositätszahl von 66 ml/g (gemessen bei 25 °C in 0,5 gew.-%iger DMF-Lösung).

### Komponente AV

Copolymer aus 76 Gew.-% Styrol und 24 Gew.-% Acrylnitril, charakterisiert durch eine Viskositätszahl von 55 ml/g (gemessen bei 25 °C in 0,5 gew.-%iger DMF-Lösung).

### Komponente B1

S-AN-MA-Terpolymer (74/25/1 Gew.-%) mit einer VZ von 80 ml/g.

### Komponente B2

S-AN-MA-Terpolymer (73/25/2 Gew.-%) mit einer VZ von 80 ml/g.

### Komponente C (Glasfasern)

### C1:

Zur Herstellung der Compounds wurden Glasfasern mit einer Aminosilanschlichte verwendet, Faserdurchmesser 10 µm, Stapelfasern der Länge 4,5 mm.

### C2:

Glasfaserroving R099 2400 5383 der Fa. Vetrotex mit einer Aminosilanschlichte, Faserdurchmesser 17 µm.

### Komponente D1

### Hyperverzweigtes Polycarbonat:

### Allgemeine Arbeitsvorschrift:

Der mehrfunktionelle Alkohol TMP x 1,2 PO, Diethylcarbonat und 0,15 Gew.-% Kaliumcarbonat als Katalysator (Menge bezogen auf Menge Alkohol) wurden in einem Molverhältnis Alkohol zu Carbonat von 1:1 in einem Dreihalskolben, ausgestattet mit Rührer, Rückflusskühler und Innenthermometer vorgelegt, die Mischung auf 140 °C erwärmt, und 2 h bei dieser Temperatur gerührt. Mit fortschreitender Reaktionsdauer reduzierte sich dabei die Temperatur des Reaktionsgemisches bedingt durch die einsetzende Siedekühlung des freigesetzten Ethanols. Nun wurde der Rückflusskühler gegen einen absteigenden Kühler getauscht, bezogen auf die Äquivalentmenge Katalysator ein Äquivalent Phosphorsäure zugegeben, Ethanol abdestilliert und die Temperatur des Reaktionsgemisches langsam bis auf 160 °C erhöht. Der abdestillierte Alkohol wurde in einem gekühlten Rundkolben gesammelt, ausgewogen und der Umsatz so gegenüber dem theoretisch möglichen Vollumsatz prozentual zu 72 % ermittelt.

Anschließend wurde bei 160 °C über einen Zeitraum von 1 h trockener Stickstoff durch das Reaktionsgemisch geleitet, um noch vorhandene Restmengen von Monomeren zu entfernen. Danach wurde das Reaktionsgemisch auf Raumtemperatur abgekühlt.

### Analytik der erfindungsgemäßen Polycarbonate:

Die Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt. M_{w} = 2300 g/mol; Mₙ = 1500 g/mol.

Die Bestimmung der OH-Zahl erfolgte nach DIN 53240, Teil 2 und betrug 400 mg KOH/g. Die Bezeichnung "TMP x 1,2 PO" beschreibt darin ein Produkt, das je mol Trimethylolpropan (TMP) mit durchschnittlich 1,2 mol Propylenoxid (PO) umgesetzt worden ist.

### Komponente D3

Poly-n-Butylacrylat-Oligomer mit einem Molgewicht von 1.700 g/mol (bestimmt bei 25°C als Mw mittels GPC, THF als Laufmittel, Polystyrol als Standard).

### Herstellung der Compounds

Die Komponenten wurden in einem Zweiwellenextruder bei einer Massetemperatur von 260 bis 300 °C gemischt. Die Schmelze wurde durch ein Wasserbad geleitet und granuliert.

### Herstellung der Matrices

Die Komponenten wurden in einem Zweiwellenextruder bei einer Massetemperatur von 240 bis 260 °C gemischt. Die Schmelze wurde durch ein Wasserbad geleitet und granuliert.

Zusammensetzung und Eigenschaften der Compounds:

**TABELLE 1**

| Versuch | V1 | V2 | V3 | 4 | 5 | 6 | 7 |
|---|---|---|---|---|---|---|---|
| Komponente A1 | 80 | - | - | 78 | - | - | - |
| Komponente A2 | - | 80 | - | | 78 | 78,5 | 78,5 |
| Komponente AV1 | - | | 80 | | | - | - |
| Komponente B1 | 5 | 5 | 5 | 5 | 5 | 5 | - |
| Komponente B2 | - | | - | | | - | 5 |
| Komponente D3 | - | | - | 2 | 2 | - | - |
| Komponente D1 | | | - | | | 1,5 | 1,5 |
| Komponente C1 | 15 | 15 | 15 | 15 | 15 | 15 | 15 |
| Vicat B [°C] | 113 | 112 | 112 | 112 | 111 | 112 | 112 |
| MVI [ml/10 min] | 7,8 | 10,8 | 14,3 | 11,3 | 14,1 | 13,6 | 13,4 |
| An, RT [kJ/m²] | 17,2 | 15,1 | 11,9 | 19,1 | 17,6 | 18,1 | 19,2 |
| E-Modul [MPa] | 6.870 | 6.900 | 6.950 | 7.200 | 7.100 | 7.150 | 7.100 |
| Reißdehnung [%] | 1,8 | 1,7 | 1,4 | 1,9 | 1,8 | 1,9 | 1,9 |

Die Matrices wurden wie vorgehend beschrieben unter Verwendung der Komponente C2 zu Faserverbundwerkstoffen mit einem Faservolumen von 0,52 verarbeitet. Die Quer-Längs-Schubfestigkeit (R⊥∥) bei 80 °C wurde in einem Biegeversuch nach DIN 53398-2 bestimmt. Die Längs-Druckfestigkeit (R_{LD}) bei 80 °C wurde in einem Biegeversuch nach DIN 53398-1 bestimmt.

**TABELLE 2:**

| Matrix | V8 | V9 | 10 | 11 | 12 | 13 | V14 |
|---|---|---|---|---|---|---|---|
| A1 | 100 | 90 | 88 | - | - | - | - |
| A2 | - | - | - | 88 | 88 | 88 | - |
| AV | - | - | - | - | - | - | 90 |
| B1 | - | 10 | 10 | 10 | - | 10 | - |
| B2 | - | - | | - | 10 | - | 10 |
| D3 | - | - | 2 | 2 | 2 | - | - |
| D1 | - | - | - | - | - | 2 | - |

| Verbundwerkstoffe | | | | | | | |
|---|---|---|---|---|---|---|---|
| (R⊥∥)[MPa] | 30 | 43 | 51 | 48 | 49 | 47 | 27 |
| (R_{LD})[MPa] | 410 | 530 | 570 | 560 | 565 | 560 | 315 |

Die erfindungsgemäßen Formmassen oder Verbundwerkstoffe weisen verbesserte Zähigkeit und Steifigkeit auf.

## Patentansprüche

1. Thermoplastische Formmasse, enthaltend,
a) 0 bis 97,9 Gew.-% eines oder mehrerer (Methyl)Styrol-Acrylnitril-Copolymere, die keine von Maleinsäureanhydrid abgeleiteten Einheiten aufweisen, mit einer Viskositätszahl kleiner 85 ml/g, als Komponente A,
b) 1 bis 98,9 Gew.-% eines oder mehrerer (Methyl)Styrol-Acrylnitril-Copolymere, die, bezogen auf die gesamte Komponente B, 0,5 bis 5 Gew. % von Maleinsäureanhydrid abgeleitete Einheiten aufweisen, als Komponente B,
c) 1 bis 75 Gew.-% Glasfasern als Komponente C,
d) 0,1 bis 20 Gew.-% eines oder mehrerer Fließverbesserer, ausgewählt aus
d₁) mindestens einem hoch- oder hyperverzweigten Polycarbonat mit einer OH-Zahl von 1 bis 600 mg KOH/g Polycarbonat (gemäß DIN 53240, Teil 2) als Komponente D1,
d₂) mindestens einem hoch- oder hyperverzweigten Polyester des Typs AₓB_{y} mit x mindestens 1,1 und y mindestens 2,1 als Komponente D2, d₃
) Alkylacrylat-Oligomeren mit einem Gewichtsmittel des Molekulargewichts im Bereich von 1.200 bis 4.000 g/mol als Komponente D3,
e) 0 bis 40 Gew.-% weitere Füllstoffe, Kautschuke und/oder weitere Zusatzstoffe als Komponente E,
wobei die Gesamtmenge der Komponenten A bis D und gegebenenfalls E 100 Gew.-% ergibt.

2. Formmasse nach Anspruch 1, **dadurch gekennzeichnet, dass** Komponente B 1,0 bis 2,5 Gew.-% von Maleinsäureanhydrid abgeleitete Einheiten aufweist.

3. Formmasse nach Anspruch 1 oder 2, **dadurch gekennzeichnet, dass** Komponente D1 ein Zahlenmittel des Molekulargewichtes Mₙ von 100 bis 15.000 g/mol aufweist und Komponente D2 ein Zahlenmittel des Molekulargewichtes Mₙ von 300 bis 30.000 g/mol aufweist.

4. Formmasse nach einem der Ansprüche 1 bis 3, **dadurch gekennzeichnet, dass** Komponente D1 eine Glasübergangstemperatur T_{g} von -80 °C bis 140 °C aufweist und Komponente D2 eine Glasübergangstemperatur T_{g} von -50 °C bis 140 °C aufweist.

5. Formmasse nach einem der Ansprüche 1 bis 4, **dadurch gekennzeichnet, dass** Komponente D1 eine Viskosität (mPas) bei 23 °C (gemäß DIN 53019) von 50 bis 200.000 aufweist.

6. Formmasse nach einem der Ansprüche 1 bis 4, **dadurch gekennzeichnet, dass** Komponente D2 eine OH-Zahl (gemäß DIN 53240) von 0 bis 600 mg KOH/g Polyester und/oder eine COOH-Zahl (gemäß DIN 53240) von 0 bis 600 mg KOH/g Polyester aufweist.

7. Formmasse nach einem der Ansprüche 1 bis 3, **dadurch gekennzeichnet, dass** Komponente D3 ein Poly-n-butylacrylat-Oligomer mit einem Gewichtsmittel des Molekulargewichts von 1.500 - 2.000 g/mol ist.

8. Verfahren zur Herstellung von thermoplastischen Formmassen nach einem der Ansprüche 1 bis 7, **dadurch gekennzeichnet, dass** man die Komponenten A bis D und gegebenenfalls E in beliebiger Reihenfolge miteinander vermischt.

9. Verwendung von thermoplastischen Formmassen nach einem der Ansprüche 1 bis 7 zur Herstellung von Formkörpern, Folien oder Fasern.

10. Verwendung nach Anspruch 9, **dadurch gekennzeichnet, dass** die Formkörper KFZ-Bauteile oder Teile von Elektronikgeräten sind.

11. Formkörper, Fasern oder Folien aus einer thermoplastischen Formmasse nach einem der Ansprüche 1 bis 7.

## Claims

1. A thermoplastic molding composition, comprising
a) as component A, from 0 to 97.9% by weight of one or more (methyl)styrene-acrylonitrile copolymers which do not have any units derived from maleic anhydride, and which have an intrinsic viscosity smaller than 85 ml/g,
b) as component B, from 1 to 98.9% by weight of one or more (methyl)styrene-acrylonitrile copolymers which have, based on the entire component B, from 0.5 to 5% by weight of units derived from maleic anhydride,
c) as component C, from 1 to 75% by weight of glass fibers
d) from 0.1 to 20% by weight of one or more flow promoters, selected from
d₁) as component D1, at least one highly branched or hyperbranched polycarbonate with an OH number of from 1 to 600 mg KOH/g of polycarbonate (to DIN 53240, part 2),
d₂) as component D2, at least one highly branched or hyperbranched polyester of AₓB_{y} type, where x is at least 1.1 and y is at least 2.1,
d₃) as component D3, alkyl acrylate oligomers with a weight-average molar mass in the range from 1200 to 4000 g/mol,
e) as component E, from 0 to 40% by weight of further fillers, or rubbers, and/or further additives,
where the total amount of components A to D and, if present, E is 100% by weight.

2. The molding composition according to claim 1, wherein component B has from 1.0 to 2.5% by weight of units derived from maleic anhydride.

3. The molding composition according to claim 1 or 2, wherein component D1 has a number-average molar mass Mₙ of from 100 to 15 000 g/mol, and component D2 has a number-average molar mass Mₙ of from 300 to 30 000 g/mol.

4. The molding composition according to any of claims 1 to 3, wherein component D1 has a glass transition temperature T_{g} of from -80°C to 140°C, and component D2 has a glass transition temperature T_{g} of from -50°C to 140°C.

5. The molding composition according to any of claims 1 to 4, wherein component D1 has a viscosity (mPas) of from 50 to 200 000 at 23°C (to DIN 53019).

6. The molding composition according to any of claims 1 to 4, wherein component D2 has an OH number (to DIN 53240) of from 0 to 600 mg KOH/g of polyester, and/or a COOH number (to DIN 53240) of from 0 to 600 mg KOH/g of polyester.

7. The molding composition according to any of claims 1 to 3, wherein component D3 is a poly-n-butyl acrylate oligomer with a weight-average molar mass of from 1500 to 2000 g/mol.

8. A process for the production of thermoplastic molding compositions according to any of claims 1 to 7, which comprises mixing components A to D and, if present, E in any desired sequence with one another.

9. The use of thermoplastic molding compositions according to any of claims 1 to 7 for the production of moldings, foils, or fibers.

10. The use according to claim 9, wherein the moldings are motor-vehicle components, or parts of electronic equipment.

11. A molding, fiber or foil composed of a thermoplastic molding composition according to one of claims 1 to 7.

## Revendications

1. Masse de moulage thermoplastique, contenant
a) 0 à 97,9% en poids d'un ou de plusieurs copolymères de (méthyl)styrène-acrylonitrile, qui ne présentent pas d'unités dérivées de l'anhydride de l'acide maléique, présentant un indice de viscosité inférieur à 85 ml/g, comme composant A,
b) 0 à 98,9% en poids d'un ou de plusieurs copolymères de (méthyl)styrène-acrylonitrile, qui, par rapport à la totalité du composant B, présentent 0,5 à 5% en poids d'unités dérivées de l'anhydride de l'acide maléique, comme composant B,
c) 1 à 75% en poids de fibres de verre comme composant C,
d) 0,1 à 20% en poids d'un ou de plusieurs agents d'amélioration de l'écoulement, choisis parmi
d₁) au moins un polycarbonate hautement ramifié ou hyperramifié présentant un indice d'OH de 1 à 600 mg de KOH/g de polycarbonate (selon la norme DIN 53240, partie 2) comme composant D1,
d₂) au moins un polyester hautement ramifié ou hyperramifié du type AₓB_{y} avec x valant au moins 1,1 et y valant au moins 2,1 comme composant D2,
d₃) des oligomères d'acrylate d'alkyle présentant une moyenne pondérale du poids moléculaire dans la plage de 1200 à 4000 g/mole comme composant D3,
e) 0 à 40% en poids d'autres charges, caoutchoucs et/ou d'autres additifs comme composant E,
la quantité totale des composants A à D et le cas échéant E étant de 100% en poids.

2. Masse de moulage selon la revendication 1, **caractérisée en ce que** le composant B présente 1,0 à 2,5% en poids d'unités dérivées de l'acide maléique.

3. Masse de moulage selon la revendication 1 ou 2, **caractérisée en ce que** le composant D1 présente une moyenne numérique du poids moléculaire Mₙ de 100 à 15 000 et le composant D2 présente une moyenne numérique du poids moléculaire Mₙ de 300 à 30 000 g/mole.

4. Masse de moulage selon l'une quelconque des revendications 1 à 3, **caractérisée en ce que** le composant D1 présente une température de transition vitreuse T_{g} de -80°C à 140°C et le composant D2 présente une température de transition vitreuse T_{g} de -50°C à 140°C.

5. Masse de moulage selon l'une quelconque des revendications 1 à 4, **caractérisée en ce que** le composant D1 présente une viscosité (mPa.s) à 23°C (selon la norme DIN 53019) de 50 à 200 000.

6. Masse de moulage selon l'une quelconque des revendications 1 à 4, **caractérisée en ce que** le composant D2 présente un indice d'OH (selon la norme DIN 53240) de 0 à 600 mg de KOH/g de polyester et/ou un indice de COOH (selon la norme DIN 53240) de 0 à 600 mg de KOH/g de polyester.

7. Masse de moulage selon l'une quelconque des revendications 1 à 3, **caractérisée en ce que** le composant D3 est un oligomère de poly(acrylate de n-butyle) présentant une moyenne pondérale du poids moléculaire de 1500-2000 g/mole.

8. Procédé pour la préparation de masses de moulage thermoplastiques selon l'une quelconque des revendications 1 à 7, **caractérisé en ce qu'**on mélange les composants A à D et le cas échéant E dans un ordre quelconque les uns avec les autres.

9. Utilisation de masses de moulage thermoplastiques selon l'une quelconque des revendications 1 à 7 pour la fabrication de corps moulés, de feuilles ou de fibres.

10. Utilisation selon la revendication 9, **caractérisée en ce que** les corps moulés sont des pièces pour véhicules automobiles ou des pièces d'appareils électroniques.

11. Corps moulés, fibres ou feuilles en une masse de moulage thermoplastique selon l'une quelconque des revendications 1 à 7.
